(19) Europäisches Patentamt
European Patent Office
Office européen des brevets

(11) EP 1 570 736 A1

(12) **EUROPEAN PATENT APPLICATION**

(43) Date of publication:
**07.09.2005 Bulletin 2005/36**

(51) Int Cl.[7]: **A01N 37/52**
// (A01N37/52, 43:88, 43:653)

(21) Application number: **04356031.7**

(22) Date of filing: **05.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(71) Applicant: **Bayer CropScience S.A.**
**69009 Lyon (FR)**

(72) Inventor: **Labourdette, Gilbert**
**71600 Paray le Monial (FR)**

(74) Representative: **Nowak, Alexander**
**Bayer CropScience S.A.**
**Département Brevets et Licences**
**14-20, rue Pierre Baizet**
**B.P. 9163**
**69263 Lyon Cedex 09 (FR)**

(54) **Fungicide composition comprising an arylamidine derivative and known fungicide compounds**

(57) The present invention relates to a fungicide composition based on $N_2$-phenylamidine derivatives and another fungicide compound, preferably fluoxastrobin or prothioconazole, and a method for protecting plants against fungal diseases using such a composition.

EP 1 570 736 A1

## Description

The present invention relates to a fungicide composition intended for protecting crops against fungal diseases, and the corresponding methods of protection by application of the said composition. More precisely, the subject of the present invention is a fungicide composition based on $N_2$-phenylamidine derivatives and another fungicide compound.

As regards fungicide activity, in particular for the protection of crops, one of the problems at the heart of the research studies carried out in this technical field is the improvement of performances, in particular in terms of fungicide activity and in particular in terms of maintaining this fungicide activity over time.

The fungicide composition useful for the protection of plants against fungi must be endowed with an ecotoxicity which is reduced to the minimum. As far as possible, they should not be dangerous or toxic to the operator during use. The economic factor should of course not be overlooked in the search for novel fungicide compositions.

The fungicide composition according to the invention includes a $N_2$-phenylamidine derivative as described in international patent application WO-00/46184. These compounds are comprised within the family defined in this international patent application which covers several thousands of compounds including more than 700 compounds explicitly described. As indicated on page 10, lines 16 to 27, of this document, the $N_2$-phenylamidine derivatives of formula (I) may be incorporated into plant-protection compositions with agriculturally acceptable carriers or diluents and optionally one or more active ingredients, such as for example fungicide compounds. This reference to the use of fungicide compounds with the $N_2$-phenylamidine compounds of formula (I) has an extremely general scope. The fungicide active compounds which may be combined with the compounds of formula (I) are absolutely not described in the form of isolated compounds or in terms of a chemical family. In particular, no high-performing combination in terms of perennial fungicide activity is disclosed in this international patent application.

International patent application WO-03/024219 discloses some mixtures of $N_2$-phenylamidine compounds with some other fungicide compounds. However none of the partner compounds according to the present invention are disclosed in the said international patent application and only very few of the mixtures disclosed in this publication have led to some experimental tests.

With respect to compounds (B) used in the fungicide composition according to the invention, there are compounds known to the skilled person as possessing an individual fungicide efficacy.

Accordingly, the present invention provides a comprising:

A) an arylamidine derivative of formula (1):

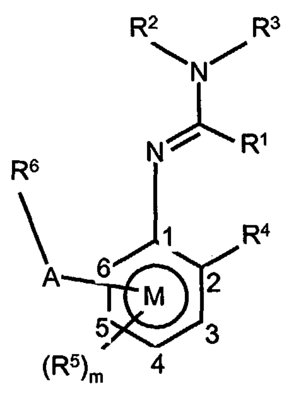

(I)

wherein:

- $R^1$ is an alkyl, an alkenyl, an alkynyl, a carbocyclic or heterocyclic monovalent group, it being possible for each of these groups to be substituted, or hydrogen
- $R^2$ and $R^3$, which may be identical or different, are any one of the groups defined for $R^1$; a cyano; an acyl; $-OR^a$ or $-SR^a$, with $R^a$ corresponding to an alkyl, an alkenyl, an alkynyl, a carbocyclic or heterocyclic monovalent group, it being possible for each of these groups to be substituted, or $R^2$ and $R^3$, or $R^2$ and $R^1$ may form together and with the atoms linking them, a ring which may be substituted;
- $R^4$ is an alkyl, an alkenyl, an alkynyl, a carbocyclic or heterocyclic monovalent group, it being possible for each of these groups to be substituted, a hydroxyl group; mercapto; azido; nitro; halo; cyano; optionally substituted acyl, amino; cyanato; thiocyanato; - $SF_5$; $-OR^a$; $-SR^a$ or $-Si(R^a)_3$;

- m = 0 to 3;
- the optional $R^5$ group or the optional $R^5$ groups, which may be mutually identical or different, have the same definition as that given above for $R^4$;
- $R^6$ is optionally substituted with a carbocyclic monovalent group; and
- A is a direct bond, -O-, $-S(O)_n-$, $-NR^9-$, $-CR^7=CR^7-$, -C=C-, $-A^1-$, $-A^1-A^1$, $-O-(A^1)_k-O-$, $-O-(A^1)_k-$, $-A^3-$, $-A^4-$, $-A^1O-$, $-A^1S(O)_n-$, $-A^2-$, $OA^2-$, $-NR^9A^2-$, $-OA^2-A^1-$, $-OA^2-C(R^7)=C(R^8)-$, $-S(O)_nA^1-$, $-A^1-A^4-$, $-A^1-A^4-C(R^8)=N-N=CR^8-$, $-A^1-A^4-C(R^8)=N-X^2-X^3-$, $-A^1-A^4-A^3-$, $-A^1-A^4-N(R^9)-$, $-A^1-A^4-X-CH_2-$, $-A^1-A^4-A^1-$, $-A^1-A^4-CH_2X-$, $-A^1-A^4-C(R^8)=N-X^2-X^3-X^1-$, $-A^1-X-C(R^8)=N-$, $-A^1-X-C(R^8)=N-N=CR^8-$,$-A^1-X-C(R^8)=N-N(R^9)-$, $-A^1-X-A^{-}-X^1-$, $-A^1-O-A^3-$, $-A^1-O-C(R^7)=C(R^8)-$,$-A^1-O-N(R^9)-A^2-N(R^9)-$, $-A^1-O-N(R^9)-A^2-$, $-A^1-N(R^9)-A^2-N(R^9)-$,$-A^1-N(R^9)-A^2-$, $-A^1-N(R^9)-N=C(R^8)-$, $-A^3-A^1-$, $-A^4-A^3-$, $-A^2-NR^9-$, $-A^1-A^2-X^1-$, $-A^1-A^1-A^2-X^1-$, $-O-A^2-N(R^9)-A^2-$, $-CR^7=CR^7-A^2-X^1-$, $-C\equiv C-A^2-X^1-$, $-N=C(R^8)-A^2-X^1-$, $-C(R^8)=N-N=C(R^8)-$, $-C(R^8)=N-N(R^9)-$, $-(CH_2)_2-O-N=C(R^8)-$ or $-X-A^2-N(R^9)-$ with

  n = 0, 1 or 2,
  k = 1 to 9,
  $A^1 = -CHR^7-$,
  $A^2 = -C(=X)-$,
  $A^3 = -C(R^8)=N-O-$,
  $A^4 = -O-N=C(R^8)-$,
  X = O or S,
  $X^1$ = O, S, $NR^9$ or a direct bond,
  $X^2$ = O, $NR^9$ or a direct bond,
  $X^3$ = hydrogen, -C(=O)-, $-SO_2-$ or a direct bond,

- $R^7$, which are mutually identical or different, each correspond to an optionally substituted alkyl, to a cycloalkyl or a phenyl, it being possible for each of these groups to be substituted, hydrogen, a halogen, a cyano, or an acyl;
- $R^8$, which are mutually identical or different, each correspond to an alkyl, an alkenyl, an alkynyl, an alkoxy, an alkylthio, it being possible for each of these groups to be substituted, a carbocyclic or heterocyclic monovalent group which may be optionally substituted, or hydrogen;
- $R^9$, which are mutually identical or different, each correspond to an optionally substituted alkyl, to a monovalent carbocyclic or heterocyclic group which may be optionally substituted, or to an acyl; or two $R^9$ groups may form together, and with the atoms linking them, a 5-7-membered ring;
- the group represented on the right side of the bond A is linked to $R^6$; or $-A-R^6$ and $R^5$ form together with the benzene ring M, a system of optionally substituted condensed rings;
- and the optional optical and/or geometric isomers, the tautomers and the addition salts with an acid or a base, which are agriculturally acceptable, of these derivatives of formula (I); and mixtures thereof; and

B) a fungicide compound selected from actinovate; aldimorph; andoprim; boscalid; capsimycin; carvone; clozylacon; cyflufenamid; diclomezine; flumorph; fluoxastrobin; iodocarb; irumamycin; metrafenone; mildiomycin; myclobutanil; orysastrobin; oxolinic acid; oxpoconazole; oxyfenthiin; paclobutrazol; penthiopyrad; picobenzamid; propanosine-sodium; proquinazid; prothioconazole; pyrrolnitrine; GY-81 also known as sodium tetrathio-(peroxocarbonate); tecloftalam; tiadinil; tricyclamide; uniconazole; cis-1-(4-chlorophenyl)-2-(1H-1,2,4-triazole-1-yl)-cycloheptanol; N-(3-ethyl-3,5,5-trimethyl-cyclohexyl)-3-formylamino-2-hydroxy-benzamide; N-(6-methoxy-3-pyridinyl)-cyclopropanecarboxamide; N-butyl-8-(1,1-dimethylethyl)-1-oxaspiro[4.5]decan-3-amine; methyl 1-(2,3-dihydro-2,2-dimethyl-1 H-inden-1-yl)-1 H-imidazole-5-carboxylate; methyl 2-[[[cyclopropyl[(4-methoxyphenyl)imino]methyl]thio]methyl]-.alpha.-(methoxymethylene)- benzeneacetate; methyl 2-[2-[3-(4-chloro-phenyl)-1-methyl-allylideneaminooxymethyl]-phenyl]-3-methoxy-acrylate; (2S)-N-[2-[4-[[3-(4-chlorophenyl)-2-propynyl]oxy]-3-methoxyphenyl]ethyl]-3-methyl- 2-[(methylsulfonyl)-amino]-butanamide; 1-(1-naphthalenyl)-1 H-pyrrole-2,5-dione; 2,3,5,6-tetrachloro-4-(methylsulfonyl)-pyridine; 2,4-dihydro-5-methoxy-2-methyl-4-[[[[1-[3-(trifluoromethyl)-phenyl]-ethylidene]-amino]-oxy]-methyl]-phenyl]-3H-1,2,3-triazol-3-one; 2-amino-4-methyl-N-phenyl-5-thiazolecarboxamide; 2-chloro-N-(2,3-dihydro-1,1,3-trimethyl-1H-inden-4-yl)-3-pyridincarboxamide; 3,4,5-trichloro-2,6-pyridinedicarbonitrile; 3-[(3-bromo-6-fluoro-2-methyl-1H-indol-1-yl)sulfonyl]-N,N-dimethyl-1H-1,2,4-triazole-1-sulfonamide, and mixtures thereof.

The fungicide composition according to the invention can be used for the control of fungi infesting cereals, grapevine, vegetables, lucerne, soyabean, market garden crops, turf, wood and horticultural plants, among others.

The present invention advantageously provides a fungicide composition which can be used for controlling

three major fungal diseases of cereals, namely: powdery mildew, brown rust and Septoria diseases.

The present invention provides a fungicide composition based on $N_2$-phenylamidine derivatives which is more active against fungi which are harmful to plants, and which is in particular active over longer periods than the fungicide agents known up until now.

The present invention provides a fungicide composition which is high-performing in particular as regards its efficacy against fungi and the perenniality of this efficacy so as to be able to reduce the doses of chemical products spread in the environment for combating fungal attacks of plants.

The present invention provides a fungicide composition which is more active and active for longer, and which therefore has a lower dose, but which is also less toxic, in particular in the preventive and curative treatment of fungal diseases, for example, of cereals, Solanaceae, grapevine, vegetables, lucerne, soyabean, market garden crops, turf, wood or horticultural plants, advantageously on cereals.

The fungicide composition according to the invention may advantageously allow an improvement in the yield of the crops which is significant from an agronomic point of view.

In the definitions of the compounds of formula (I) according to the present invention, the various radicals and chemical terms used have, unless otherwise stated, the following meanings:

- "alkyl or alkyl-" denotes a linear or branched saturated hydrocarbon radical containing from 1 to 8 carbon atoms;
- "alkenyl" denotes a linear or branched hydrocarbon radical containing from 1 to 8 carbon atoms and an unsaturation in the form of double bond;
- "alkynyl" denotes a linear or branched hydrocarbon radical containing from 1 to 8 carbon atoms and an insaturation in the form of a triple bond;
- "alkoxy" denotes an alkyloxy radical;
- "acyl" denotes the formyl radical or an alkoxycarbonyl radical;
- "cycloalkyl" denotes a saturated cyclic hydrocarbon radical containing from 3 to 8 carbon atoms;
- "aryle" denotes one or more aromatic radicals, preferably a phenyl or a naphthyl;
- "heterocycle" denotes an unsaturated or a completely or partially saturated cyclic radical containing from 3 to 8 atoms, chosen from carbon, nitrogen, sulphur and oxygen, for example, and without limitation, pyridyl, pyridinyl, quinolyl, furyl, thienyl, pyrrolyl, oxazolinyl;
- the term "optionally substituted " means that the radicals thus termed may be substituted with one or more radicals chosen from chlorine, bromine, fluorine, iodine, alkyl, alkoxy, hydroxyl, nitro, amino; cyano and acyl.

In the fungicide composition according to the invention, the preferred compounds (A) are compounds of formula (I) wherein:

- $R^1$ is an alkyl, an alkenyl or an alkynyl, it being possible for each of these groups to be substituted with an alkoxy, a haloalkoxy, an alkylthiol, halogen or a phenyl optionally substituted with an alkyl, with a haloalkyl, with an alkoxy, with a haloalkoxy, with an alkylthiol or with a halogen, or hydrogen;
- $R^2$ and $R^3$ which may be identical or different and which have the same definition as that given above for $R^1$ or which correspond to an alkoxy, an alkoxyalkyl, a benzyloxy, a cyano or an alkylcarbonyl;
- $R^4$ is an alkyl, an alkenyl or an alkynyl, it being possible for each of these groups to be substituted with an alkoxy, a haloalkoxy, an alkylthiol, halogen or a phenyl optionally substituted with an alkyl, with a haloalkyl, with an alkoxy, with a haloalkoxy, with an alkylthiol or with a halogen; a hydroxyl; a halogen; a cyano; an acyl (preferably: -C(=O)$R^c$, -C(=S)$R^c$ or -S(O)$_p$$R^c$, with $R^c$ corresponding to an alkyl, a haloalkyl, alkoxy, haloalkoxy, alkylthiol, an amine, a monoalkylamine, a dialkylamine or a phenyl optionally substituted with an alkyl, with a haloalkyl, with an alkoxy, with a haloalkoxy, or with an alkylthiol;
- m = 0 or 1;
- when it is present, $R^5$ is a group having the same definition as that given above for $R^4$,
- A is a direct bond, -O-, -S-, -N$R^9$-, -CH$R^7$- or -O-CH$R^7$-,
- with $R^9$, when it is present, corresponding to an alkyl, an alkenyl or an alkynyl, it being possible for each of these groups to be substituted with an alkoxy, a haloalkoxy, an alkylthiol, halogen or a phenyl optionally substituted with an alkyl, with a haloalkyl, with an alkoxyl, with a haloalkoxy, with an alkylthiol or with a halogen, or corresponds to hydrogen;
- and $R^7$ has the same definition as that given above for $R^9$ or represents a hydroxyl; a halogen; a cyano; an acyl; alkoxy; a haloalkoxy or an alkylthiol;
- A is linked to the 4-position of the benzyl ring M; and
- $R^6$ is a phenyl or an aromatic heterocycle, optionally substituted with one or more substituents, which may be identical or different, and which may be selected from the following list: hydroxyl; halogen; cyano; acyl (preferably -C(=O)$R^c$, -C(=S)$R^c$ or -S(O)p$R^c$, with $R^c$ = alkyl, haloalkyl, alkoxy, haloalkoxy, alkylthiol or phenyl optionally substituted with an alkyl, haloalkyl, alkoxy, haloalkoxy or alkylthiol); amine; alkylamine; dialkylamine; alkyl, haloalkyl, $R^aO$-alkyl, acyloxyalkyl, cyanooxyalkyl, alkoxy; haloalkoxy; alkylthiol; cycloalkyl (preferably cyclohexyl or cyclopentyl) optionally substituted with an alkyl, a haloalkyl, an alkoxy, a haloalkoxy or with an alkylthiol; and benzyl optionally substituted with an alkyl, a haloalkyl, an alkoxy, a haloalkoxy or with an alkylthiol.

The compounds (A) of formula (I) which are particularly preferred possess the following characteristics, taken in isolation or combination, preferably in combination:

- $R^1$ = H;
- $R^2$ = C1-C6 alkyl, preferably methyl;
- $R^3$ = C1-C6 alkyl, preferably ethyl;
- $R^4$ = C1-C6 alkyl, preferably methyl;
- $R^5$ = C1-C6 alkyl, preferably methyl and $R^5$ is linked to the carbon at C5 of the benzyl ring M, with m = 1;
- A is linked to the carbon at C4 of the benzyl ring M and represents -O-;
- $R^6$ = aryl, preferably benzyl, optionally and advantageously substituted with at least one alkyl and/or with at least one halogen.

The compounds (A) of formula (I) which more are particularly preferred possess the following characteristics, taken in isolation or combination, preferably in combination:

- $R^1$ = H;
- $R^2$= methyl;
- $R^3$ = ethyl;
- $R^4$ = methyl;
- $R^5$ = methyl and $R^5$ is linked to the carbon at C5 of the benzyl ring M, with m = 1;
- A is linked to the carbon at C4 of the benzyl ring M and represents -O-;
- $R^6$ = benzyl substituted with at least one alkyl and/or with at least one halogen.

The preferred compounds (A) comprised in the fungicide composition according to the invention are:

- *N*-ethyl-*N*-methyl-*N'*-[4-(chloro-3-trifluoromethylphenoxy)-2,5-xylyl]-formamidine, and
- *N*-ethyl-*N*-methyl-*N'*-[4-(fluoro-3-trifluoromethylphenoxy)-2,5-xylyl]-formamidine, and the eventual tautomers and addition salts with an acid or a base, which are agriculturally acceptable, of these compounds (A).

The preferred compounds (B) comprised in the fungicide composition according to the invention are fluoxastrobin and prothioconazole.

The preferred fungicide composition according to the invention comprises *N*-ethyl-*N*-methyl-*N'*-[4-(chloro-3-trifluoromethylphenoxy)-2,5-xylyl]-formamidine and fluoxastrobin or prothioconazole.

The fungicide composition according to the invention makes it possible to significantly improve the persistence of antifungal activity in the context of the curative or preventive treatment of major diseases of cereals such as powdery mildew, brown rust and Septoria diseases. This composition may allow eradicant properties which are superior to those of the compounds used alone.

From the point of view of weight, it should be specified that in accordance with the invention, the weight ratio (A/B) is defined as follows $0.001 \leq A/B \leq 500$; preferably $0.01 \leq A/B \leq 500$; still more preferably $0.01 \leq A/B \leq 10$.

In the case where compound (B) is fluoxastrobin or prothioconazole (or one of their equivalents), it has been found that the weight ratio (A/B) is advantageously $0.05 \leq A/B \leq 5$.

The compound (A)/compound (B) ratio is defined as being the ratio by weight of these 2 compounds.

In the fungicide composition according to the invention, the compound (A)/compound (B) ratio may be advantageously chosen so as to produce a synergistic effect. The term synergistic effect is understood to mean in particular that defined by Colby in an article entitled "Calculation of the synergistic and antagonistic responses of herbicide combinations" Weeds, (1967), <u>*15*</u>, pages 20-22. The latter article mentions the formula:

$$E = X + Y - \frac{XY}{100}$$

wherein E represents the expected percentage of inhibition of the disease for the fungicide composition comprising two fungicide compounds at defined doses (for example equal to x and y respectively), X is the percentage of inhibition observed for the disease with compound (A) at a defined dose (equal to x), Y is the percentage of inhibition observed

for the disease with compound (B) at a defined dose (equal to y). When the percentage of inhibition observed for the combination is greater than E, there is a synergistic effect.

The term "synergistic effect" may also mean the effect defined by application of the Tammes method, "Isoboles, a graphic representation of synergism in pesticides", *Netherlands Journal of Plant Pathology,* 70(1964), pages 73-80.

The compound (A)/compound (B) ratio ranges indicated above do not in any way limit the scope of the invention, but are, rather, mentioned as a guide, a person skilled in the art being entirely capable of carrying out additional tests to find other values of the ratio of doses of these two compounds, for which a synergistic effect is observed.

The fungicide composition according to the invention may comprise from 0.00001 to 100%, preferably from 0.001 to 80%, of active compounds, whether these compounds are combined, or whether they are in the form of two active ingredients used separately.

The fungicide composition according to the invention based on a compound (A) and a compound (B) may also comprise one or more other active ingredients chosen from fungicide, herbicide, insecticide or plant growth regulator compounds.

In addition to these additional active agents, the fungicide composition according to the invention may also include any other excipient or auxiliary agent useful in plant protection formulations such as, for example, an agriculturally suitable inert carrier and optionally an agriculturally suitable surfactant.

The form of the fungicide composition according to the invention can be selected from of a large number of formulations, such as aerosol dispenser; suspension of capsules; cold fogging concentrate; dustable powder; emulsifiable concentrate; aqueous-aqueous type emulsion; oil-inverse type emulsion; encapsulated granule; fine granule; suspension concentrate for seed treatment; compressed gas; gas generating product; granule; hot fogging concentrate; macrogranule; microgranule; oil-dispersible powder; oil miscible suspension concentrate; oil-miscible liquid; paste; plant rodlet; powder for dry seed treatment; seeds coated with a pesticide; smoke candle; smoke cartridge; smoke generator; smoke pellet; smoke rodlet; smoke tablet; smoke tin; soluble concentrate; soluble powder; solution for seed treatment; suspension concentrate (= flowable concentrate); tracking powder; ultra low volume liquid; ultra low volume suspension; vapour releasing product; water-dispersible granules or tablets; water dispersible powder for slurry treatment; water-soluble granules or tablets; water-soluble powder for seed treatment; wettable powder.

The fungicide composition of the present invention covers not only the formulations which are ready to be applied to the crop by means of a suitable device, such as a spraying device, but also the commercial concentrated formulations which have to be diluted before application to the crop.

The fungicide composition herein described is used in general for application to growing plants, or to sites where crops are grown or intended to grow, or for the coating or film-coating of seeds.

The fungicide composition according to the invention may be applied to the vegetation and in particular to the leaves infested or capable of being infested with the phytopathogenic fungi. Another method of applying the fungicide composition according to the invention is to add a formulation containing the active ingredients to the irrigation water.

For its practical use, the fungicide composition according to the invention can be used alone or in formulations containing one or the other of the active ingredients or alternatively both of them together, in combination or association with one or more other compatible components which are, for example, solid or liquid fillers or diluents, adjuvants, surfactants or equivalents, which are suitable for the desired use and which are acceptable for uses in agriculture. The formulations can be of any type known in the sector which are suitable for application onto all types of cultures or crops. These formulations, which can be prepared in any manner known by the skilled person, also form part of the invention.

The formulations can also include ingredients of other types, such as protective colloids, adhesives, thickeners, thixotropic agents, penetrating agents, oils for spraying, stabilisers, preserving agents (in particular mould-proofing or biocide agents), sequestering or chelating agents or the like. More generally, the compounds used in the invention can be combined with any solid or liquid additives corresponding to the usual formulation techniques.

The term "filler" means an organic or inorganic, natural or synthetic component with which the active components are combined to facilitate its application, for example, onto the plants, the seeds or the soil. This filler is consequently generally inert and it must be acceptable (for example acceptable for agronomic uses, in particular for treating plants).

The filler can be solid, for example clays, natural or synthetic silicates, silica, resins, waxes, solid fertilizers (for example ammonium salts), natural soil minerals, such as kaolins, clays, talc, lime, quartz, attapulgite, montmorillonite, bentonite or diatomaceous earths, or synthetic minerals, such as silica, alumina or silicates, in particular aluminium or magnesium silicates. The solid fillers which are suitable for granules are as follows: natural, crushed or broken rocks, such as calcite, marble, pumice, sepiolite and dolomite; synthetic granules of inorganic or organic flours; granules of organic material such as sawdust, coconut shell, corn ear or envelope, or tobacco stem; kieselguhr, tricalcium phosphate, powdered cork or adsorbent carbon black; water-soluble polymers, resins, waxes; or solid fertilizers. Such composition can, if so desired, contain one or more compatible agents such as wetting agents, dispersing agents, emulsifiers or colourings which, when they are solid, can also act as diluents.

The fillers can also be liquid, for example: water, alcohols, in particular butanol or glycol, as well as ethers or

esters thereof, in particular methyl glycol acetate; ketones, in particular acetone, cyclohexanone, methyl ethyl ketone, methyl isobutyl ketone or isophorone; petroleum fractions such as paraffinic or aromatic hydrocarbons, in particular xylenes or alkylnaphthalenes; mineral or plant oils; aliphatic chlorohydrocarbons, in particular trichloroethane or methylene chloride; aromatic chlorohydrocarbons, in particular chlorobenzenes; water-soluble or highly polar solvents such as dimethylformamide, dimethyl sulphoxide, N,N-dimethyl-acetamide or N-methylpyrrolidone; N-octylpyrrolidone, liquefied gases; or the like, whether they are taken separately or as a mixture.

The surfactant can be an emulsifier, a dispersing agent or a wetting agent, of ionic or nonionic type or a mixture of these surfactants. Among those surfactants there are used, for example, polyacrylic acid salts, lignosulphonic acid salts, phenolsulphonic or naphthalenesulphonic acid salts, polycondensates of ethylene oxide with fatty alcohols or fatty acids or fatty esters or fatty amines, substituted phenols (in particular alkylphenols or arylphenols), ester-salts of sulphosuccinic acid, taurine derivatives (in particular alkyl taurates), phosphoric esters of alcohols or of polycondensates of ethylene oxide with phenols, fatty acid esters with polyols, or sulphate, sulphonate or phosphate functional derivatives of the compounds described above. The presence of at least one surfactant is generally essential when the active ingredients and/or the inert filler are substantially insoluble or only sparingly soluble in water and when the filler for the said composition to be applied is water.

The formulations can also contain other additives such as adhesives or dyes. Adhesives such as carboxymethylcellulose, or natural or synthetic polymers in the form of powders, granules or matrices, such as gum arabic, latex, polyvinylpyrrolidone, polyvinyl alcohol or polyvinyl acetate, natural phospholipids, such as cephalins or lecithins, or synthetic phospholipids can be used in the formulations. It is possible to use colourings such as inorganic pigments, such as, for example: iron oxides, titanium oxides, Prussian blue; organic colouring stuffs, such as those of the alizarin, azo or metal phthalocyanin type; or of trace elements such as iron, manganese, boron, copper, cobalt, molybdenum or zinc salts.

According to another object of the present invention, there is provided a method for controlling phytopathogenic fungi of crops, characterized in that an agronomically effective and substantially non-phytotoxic quantity of a fungicide composition as herein defined is applied to the soil where plants grow or are capable of growing, to the leaves or the fruit of plants or to the seeds of plants.

The method according to the invention may either be a curing, preventing or eradicating method.

In this method, a composition used may be prepared beforehand by mixing the 2 active compounds.

According to a variant of such a method, it is also possible to apply simultaneously, successively or separately compounds (A) and (B) so as to have the combined or conjugated (A) / (B) effect, of compositions each containing one of the two active ingredients (A) or (B).

Advantageously, the quantity of fungicide composition or combination corresponds to a dose of compound (A) and of compound (B) from 1 g/ha to 2,000g/ha, preferably from 100g/ha to 3500g/ha, more preferably from 2g/ha to 1,000g/ha, even more preferably from 5g/ha to 700g/ha.

Under specific conditions, for example according to the nature of the phytopathogenic fungus to be controlled, a lower dose may offer adequate protection. Certain climatic conditions, resistance or other factors like the nature of the phytopathogenic fungi to be eliminated or the degree of infestation, for example, of the plants with these fungi, may require higher doses of combined active ingredients.

The optimum dose usually depends on several factors, for example on the type of phytopathogenic fungus to be controlled, on the type or level of development of the infested plant, on the density of vegetation, or alternatively on the method of application.

Without it being limiting, the crops treated with the fungicide composition or combination according to the invention are, for example, cereals, but this could be grapevines, vegetables, lucerne, soybean, market garden crops, turf, wood, tree or horticultural plants.

The phytopathogenic fungi of crops which may be controlled through use of the fungicide composition according to the invention include:

- the group of Oomycetes:
  - of the genus *Phytophthora* such as *Phytophthora phaseoli, Phytophthora citrophthora, Phytophthora capsici, Phytophthora cactorum, Phytophthora palmivora, Phytophthora cinnamoni, Phytophthora megasperma, Phytophthora parasitica, Phytophthora fragariae, Phytophthora cryptogea, Phytophthora porri, Phytophthora nicotianae, Phytophthora infestans* (mildew of Solanaceae, in particular late blight of potato or tomato);
  - of the family of Peronosporaceae, in particular *Plasmopara viticola* (vine downy mildew), *Plasmopara halstedei* (sunflower mildew), *Pseudoperonospora sp* (in particular cucurbit mildew *(Pseudoperonospora cubensis*) and downy mildew of hops (*Pseudoperonospora humuli*)), *Bremia lactucae* (mildew of lettuce), *Peronospora tabacinae* (downy mildew of tobacco), *Peronospora destructor* (downy mildew of onion), *Peronospora parasitica* (downy mildew of cabbage), *Peronospora farinosa* (downy mildew of chicory and downy mildew of beetroot);

- the group of adelomycetes (ascomycetes):
    - of the genus *Alternaria,* for example *Alternaria solani* (early blight of Solanaceae and in particular of tomato and potato),
    - of the genus *Guignardia,* in particular *Guignardia bidwelli* (black rot of grapevine),
    - of the genus *Venturia,* for example *Venturia inaequalis, Venturia pirina* (apple or pear scabs),
    - of the genus *Oidium,* for example powdery mildew of grapevine (*Uncinula necator*); oidium of leguminous crops, for example *Erysiphe polygoni* (powdery mildew of Cruciferae); *Leveillula taurica, Erysiphe cichoracearum, Sphaerotheca fuligena* (powdery mildew of cucurbits, of composites and of tomato); *Erysiphe communis* (powdery mildew of beetroot and cabbage); *Erysiphe pisi* (powdery mildew of pea and lucerne); *Erysiphe polyphaga* (powdery mildew of haricot bean and cucumber); *Erysiphe umbelliferarum* (powdery mildew of ombellifera, in particular of carrot); *Sphaerotheca humuli* (hop mildew); powdery mildew of wheat and barley (*Erysiphe graminis forma specie tritici* and *Erysiphe graminis forma specie hordei*),
    - of the genus *Taphrina,* for example *Taphrina deformans* (peach leaf curl),
    - of the genus *Septoria,* for example *Septoria nodorum* or *Septoria tritici* (Septoria disease of cereals),
    - of the genus *Sclerotinia,* for example *Sclerotinia sclerotinium,*
    - of the genus *Pseudocercosporella,* for example *P. herpotrichoides* (eyespot of cereals),
    - of the genus *Botrytis cinerea* (grapevine, vegetable and market garden crops, pea and the like),
    - of the genus *Phomopsis viticola* (excoriosis of grapevine),
    - of the genus *Pyrenospora,*
    - of the genus *Helminthosporium,* for example *Heiminthosporium tritici repentis* (yellow leaf spot of wheat) or *Helminthosporium teres* (yellow leaf spot of barley),
    - of the genus *Drechslera* or *Pyrenophora,*

- of the group of basidiomycetes :
    - of the genus *Puccinia,* for example *Puccinia recondita* or *striiformis* (wheat rust), *Puccinia triticina*, *Puccinia hordei,*
    - of the family *Rhizoctonia* spp, for example *Rhizoctonia solani*.

The fungicide composition or combination herein defined may also have a biocide action against bacteria and viruses, such as for example:

- fire blight, *Erwinia amylovora;*
- bacterial streak of stone fruit trees, *Xanthomonas campestris*;
- pear blossom blight, *Pseudomonas syringae*;
- bacteriosis of rice and cereals;
- the viruses present on rice, vegetable and cereal crops.

The crops envisaged in the context of the present invention may be cereal crops (wheat, barley, maize, rice) and vegetable crops (haricot bean, onion, cucurbitaceae, cabbage, potato, tomato, sweet pepper, cabbage, pea, lettuce, celery, chicory), fruit crops (strawberry plants, raspberry plants), tree crops (apple trees, pear trees, cherry trees, ginseng, lemon trees, coconut palms, pecan trees, cacao trees, walnut trees, rubber trees, olive trees, poplars, banana trees), grapevine, sunflower, beetroot, tobacco and ornamental crops. Cereals are preferred.

A classification based on the target crops may be illustrated as below:

- grapevine: powdery mildew (*Uncinula necator*), downy mildew (*Plasmopara viticola*), grey mould (*Botrytis cinerea*), excoriosis (*Phomopsis viticola*) and black rot (*Guignardia bidwelli*),
- Solanaceae: blight (*Phytophthora infestans*), alternaria disease (*Alternaria solani*) and grey mould (*Botrytis cinerea*),
- vegetable crops: downy mildew (*Peronospora* sp., *Bremia lactucae*, *Pseudoperonospora* sp), alternaria (*Alternaria* sp.), sclerotinia disease (*Sclerotinia* sp.), grey mould (*Botrytis cinerea*), foot or root rot (*Rhizoctonia* spp.), powdery mildew (*Erysiphe* sp.; *Sphaerotheca fuliginea*),
- arboriculture: scab (*Venturia inaequalis*, *V. pirina*), bacterial diseases (*Erwinia amylovora, Xanthomonas campestris*, *Pseudomonas syringae*), powdery mildew (*Podosphaera leucotricha*) and Monilia (*Monilia fructigena*),
- citrus: scab (*Elsinoe fawcetti*), melanose (*Phomopsis citri*) and *Phytophthora* sp. diseases,
- wheat, as regards controlling the following seed diseases: Fusarium diseases (*Microdochium nivale* and *Fusarium roseum*), smuts (*Tilletia caries, Tilletia controversa* or *Tilletia indica*), Septoria disease (*Septoria nodorum*),

- wheat, as regards controlling the following diseases of the aerial parts of the plant: eyespot (*Pseudocercosporella herpotrichoïdes*), take-all (*Gaeumannomyces graminis*), Fusarium disease of the foot (*F. culmorum, F. graminearum*), Rhizoctonia disease (*Rhizoctonia cerealis*), powdery mildew (*Erysiphe graminis forma specie tritici*), rusts (*Puccinia striiformis* and *Puccinia recondita*), Septoria diseases (*Septoria tritici* and *Septoria nodorum*) and yellow leaf spot of wheat (*Helminthosporium tritici-vulgaris*),
- wheat and barley, as regards controlling bacterial and viral diseases, for example barley yellow mosaic,
- barley, as regards controlling the following seed diseases: yellow leaf spot (*Pyrenophora graminea*, *Bipolaris, Pyrenophora teres* and *Cochliobolus sativus*), loose smut (*Ustilago nuda*) and Fusarium diseases (*Microdochium nivale* and *Fusarium roseum*),
- barley, as regards controlling the following diseases of the aerial parts of the plant: eyespot (*Pseudocercosporella herpotrichoïdes*), yellow leaf spot (*Pyrenophora teres* and *Cochliobolus sativus*), powdery mildew (*Erysiphe graminis forma specie hordei*), dwarf leaf rust (*Puccinia hordei*) and leaf blotch (*Rhynchosporium secalis*);
- potato, as regards controlling tuber diseases (in particular *Helminthosporium solani, Phoma tuberosa, Rhizoctonia solani, Fusarium solani*) and certain virus diseases (virus Y);
- cotton, as regards controlling the following diseases of young plants obtained from seeds: damping-off diseases and collar rot (*Rhizoctonia soiani, Fusarium oxysporum*), black root rot (*Thielaviopsis basicola*),
- pea, as regards controlling the following seed diseases: anthracnose (*Ascochyta pisi, Mycosphaerella pinodes*), Fusarium disease (*Fusarium oxysporum*), grey mould (*Botrytis cinerea*), rust (*Uromyces pisi*),
- rape plant, as regards controlling the following seed diseases: *Phoma lingam* and *Alternaria brassicae,* grey mould (*Botrytis cinerea*), and sclerotinia disease (*Sclerotinia sclerotinium*),
- maize, as regards controlling seed diseases (*Rhizopus* sp., *Penicillium* sp., *Trichoderma* sp., *Aspergillus* sp. *and Gibberella fujikuroi*), yellow leaf spot (*Bipolaris*), Fusarium disease (*Fusarium oxysporum*),
- rice: foot and root rot (*Rhizoctonia* spp.),
- flax, as regards controlling seed disease (*Alternaria linicola*),
- banana: Cercospora disease (*Mycosphaerella figiensis*),
- turf: rust, powdery mildew, yellow leaf spot, terruric diseases (*Microdochium nivale, Pythium* sp., *Rhizoctonia solani, Sclerotinia homeocarpa*),
- forest trees, as regards controlling damping-off (*Fusarium oxysporum, Rhizoctonia solani).*

Very advantageously, the method for controlling plant diseases according to the invention has shown excellent results against cereal diseases such as powdery mildew, Septoria diseases and brown rust.

The expression "are applied to the plants to be treated" is understood to mean, for the purposes of the present invention, that the fungicide composition which is the subject of the invention may be applied by means of various methods of treatment such as:

- spraying onto the aerial parts of the said plants a liquid comprising one of the said compositions,
- dusting, the incorporation into the soil of granules or powders, spraying, around the said plants, and in the case of trees injection or daubing,
- coating or film-coating the seeds of the said plants with the aid of a plant-protection mixture comprising one of the said compositions.

Spraying a liquid onto the aerial parts of the crops to be treated is the preferred method of treatment according to the invention.

The present invention also provides a product comprising a compound (A) and a compound (B) as a combined preparation for simultaneous, separate or sequential use in controlling the phytopathogenic fungi of crops at a site.

The fungicide composition according to the invention may be prepared immediately before use by using a kit-of-parts for controlling, curatively or preventively, the phytopathogenic fungi of crops, such a kit-of-parts may comprise at least one compound (A) and at least one compound (B) as herein defined, intended to be combined or used simultaneously, separately or sequentially in controlling the phytopathogenic fungi of crops at a site.

It is therefore a pack in which the user finds all the ingredients for preparing the fungicide formulation which they wish to apply to the crops. These ingredients, which comprise in particular the active agents (A) and (B) and which are packaged separately, are provided in the form of a powder or in the form of a liquid which is concentrated to a greater or lesser degree. The user simply has to mix in the prescribed doses and to add the quantities of liquid, for example of water, necessary to obtain a formulation which is ready to use and which can be applied to the crops.

The following examples are given purely by way of illustration of the invention without any limitation.

Examples

They are intended to give an illustration of the efficacy of the composition according to the invention on several cereal diseases, in particular a composition combining compound (A), having as chemical name *N*-ethyl-*N*-methyl-*N'*-[4-(chloro-3-trifluoromethylphénoxy)-2,5-xylyl]formamidine, with a fungicide compound of the triazole type, namely prothioconazole.
The trials on cereals were carried out in an open field.

1- Conditions and objectives:

The objective of these field trials is therefore to test the efficacy of compounds (A), alone at 100g/ha; 125g/ha and 150g/ha in combination with prothioconazole at 150g a.i./ha; representing a class of fungicide compounds. Powdery mildew (*Erysiphe graminis or blumeria graminis*) and Septoria diseases (*Mycosphaerella graminicola or Septoria tritici*) are the principal diseases treated.

2- Material and methods:

The products tested are therefore

- *N*-ethyl-*N*-methyl-*N'*-[4-(chloro-3-trifluorométhylphénoxy)-2,5-xylyl]-formamidine as compound (A) at 100g/ha; 125g/ha and 150g/ha as an EC type formulation at 150 g/l;
- prothioconazole as compound (B) at 150g/ha as a formulation at 250 g/l;
- compound (A) and prothioconazole combination at 100+150g/ha as a fresh preparation;
- compound (A) and prothioconazole combination at 125+150g/ha as a fresh preparation;
- compound (A) and prothioconazole combination at 150+150g/ha as a fresh preparation;
- the reference product is a mixture of epoxyconazole and pyraclostrobin (Opera® 1,51/ha recommended on *Septoria tritici*). Each trial comprises 3 repeats.

Untreated control plots are included in the experimental design in order to measure the severity of the diseases.
The experimental conditions are summarised in table 1.

Table 1

| Country | Trial | Species | Basic surface area per plot | Variety | Sowing date | Application(s) | |
|---|---|---|---|---|---|---|---|
| | | | | | | BBCH stage Date | l/ha |
| Germany | 1 | Wheat | $10m^2$ | Drifter | 14/11/0 2 | BBCH33<br>12/05/03<br>BBCH47<br>2/06/03 | 225 |

The trials were conducted under natural contamination conditions. The equipment for application of the different active ingredients is a constant compressed air pressure back sprayer. The spray nozzles have slits.
The BBCH scale has been described in Compendium of growth stage identification eves for mono- and dicotyledonous plants, extended BBCH scale, Autumn 1994 by Reinold Stauss, Basle, a joint publication of BBA-BSA-IGZ-IVA AgrEvo-BASF-Bayer-Ciba.
The efficacy results were obtained from controls carried out in the field by overall evaluation of the percentage infestation.

3 - Results:

3.1- Wheat powdery mildew (*Erysiphe graminis or blumeria graminis*)

The results were measured 20 days after the second application of the products onto wheat and are presented in table 2; for *Erysiphe graminis*, assessment 20 days after application 2 at stage BBCH73 by observations of Flag

leaf - Flag-1 - Flag-2.

Table 2

| Compounds | Rates g ai/Ha | % Efficacy observed (X) | % Efficacy expected (E) | Synergy (Colby) |
|---|---|---|---|---|
| Untreated (% infestation) | | 15% severity | | |
| Opera (pyraclostrobin + epoxyconazole) | 200+75g | 16 | | |
| Compound A | 125g | 16 | | |
| Compound A | 150g | 14 | | |
| prothioconazole | 150g | 71 | | |
| Compound A+prothioconazole | 125+150g | 88 | 76 | 12 |
| Compound A+prothioconazole | 150+150g | 94 | 75 | 19 |

The fungicide composition according to the invention has shown a better efficacy than the active ingredients used alone and the efficacy expected (E) for the mixture.

3.2- Wheat leaf-spot (*Septoria tritici* or *Mycosphaerella graminicola*)

The results were measured 30 days after the second application and are presented in table 3; for *Septoria tritici*, assessment 30 days after application 2 at stage BBCH73 by observations of Flag leaf - Flag-1 - Flag-2.

Table 3

| Compounds | Rates g ai/Ha | % Efficacy observed (X) | % Efficacy expected (E) | Synergy (Colby) |
|---|---|---|---|---|
| Untreated (% infestation) | | 70% severity | | |
| Opera (pyraclostrobin + epoxyconazole) | 200+75g | 63 | | |
| Compound A | 100g | 17 | | |
| Compound A | 125g | 19 | | |
| Compound A | 150g | 24 | | |
| prothioconazole | 150g | 69 | | |
| Compound A+prothioconazole | 100+150g | 86 | 74 | 12 |
| Compound A+prothioconazole | 125+150g | 88 | 75 | 13 |
| Compound A+prothioconazole | 150+150g | 89 | 76 | 13 |

The fungicide composition according to the invention has shown a better efficacy than the active ingredients used alone and the efficacy expected (E) for the mixture.

4 - Conclusion:

The results obtained in the open field demonstrate a synergistic effect of the fungicide composition according to the invention comprising compound (A) and prothioconazole as compound (B) on 2 major cereal diseases: wheat powdery mildew and wheat leaf-spot at several rates. This better efficacy of the fungicide composition according to the invention makes it possible to obtain efficacy levels close to or higher than the market reference products.

## Claims

**1.** Fungicide composition comprising:

A) an arylamidine derivative of formula (I):

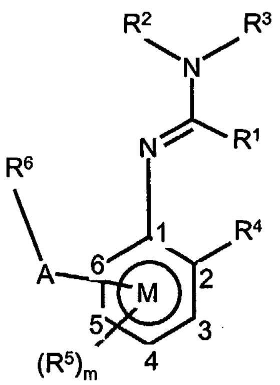

(I)

wherein:

- $R^1$ is an alkyl, an alkenyl, an alkynyl, a carbocyclic or heterocyclic monovalent group, it being possible for each of these groups to be substituted, or hydrogen
- $R^2$ and $R^3$, which may be identical or different, are any one of the groups defined for $R^1$; a cyano; an acyl; $-OR^a$ or $-SR^a$, with $R^a$ corresponding to an alkyl, an alkenyl, an alkynyl, a carbocyclic or heterocyclic monovalent group, it being possible for each of these groups to be substituted, or $R^2$ and $R^3$, or $R^2$ and $R^1$ may form together and with the atoms linking them, a ring which may be substituted;
- $R^4$ is an alkyl, an alkenyl, an alkynyl, a carbocyclic or heterocyclic monovalent group, it being possible for each of these groups to be substituted, a hydroxyl group; mercapto; azido; nitro; halo; cyano; optionally substituted acyl, amino; cyanato; thiocyanato; $-SF_5$; $-OR^a$; $-SR^a$ or $-Si(R^a)_3$;
- m = 0 to 3;
- the optional $R^5$ group or the optional $R^5$ groups, which may be mutually identical or different, have the same definition as that given above for $R^4$;
- $R^6$ is optionally substituted with a carbocyclic monovalent group; and
- A is a direct bond, -O-, $-S(O)_n-$, $-NR^9-$, $-CR^7=CR^7-$, $-C\equiv C-$, $-A^1-$, $-A^1-A^1$, $-O-(A^1)_k-O-$, $-O-(A^1)_k-$, $-A^3-$, $-A^4-$, $-A^1O-$, $-A^1S(O)_n-$, $-A^2-$, $OA^2-$, $-NR^9A^2-$, $-OA^2-A^1-$, $-OA^2-C(R^7)=C(R^8)-$, $-S(O)_nA^1-$, $-A^1-A^4-$, $-A^1-A^4-C(R^8)=N-N=CR^8-$, $-A^1-A^4-C(R8)=N-X^2-X^3-$, $-A^1-A^4-A^3-$, $-A^1-A^4-N(R^9)-$, $-A^1$ $-A^4-X-CH_2-$, $-A^1-A^4-A^1-$, $-A^1-A^4-CH_2X-$, $-A^1-A^4-C(R^8)=N-X^2-X^3-X^1-$, $-A^1-X-C(R^8)=N-$, $-A^1-X-C(R^8)=N-N=CR^8-$,$-A^1-X-C(R^8)=N-N(R^9)-$, $-A^1-X-A^--X^1-$, $-A^1-O-A^3-$, $-A^1-O-C(R^7)=C(R^8)-$,$-A^1-O-N(R^9)-A^2-N(R^9)-$, $-A^1-O-N(R^9)-A^2-$, $-A^1-N(R^9)-A^2-N(R^9)-$,$-A^1-N(R^9)-A^2-$, $-A^1-N(R^9)-N=C(R^8)-$, $-A^3-A^1-$, $-A^4-A^3-$, $-A^2-NR^9-$, $-A^1-A^2-X^1-$, $-A^1-A^1-A^2-X^1-$, $-O-A^2-N(R^9)-A^2-$, $-CR^7=CR^7-A^2-X^1-$, $-C\equiv C-A^2-X^1$, $-N=C(R^8)-A^2-X^1-$, $-C(R^8)=N-N=C(R^8)-$, $-C(R^8)=N-N(R^9)-$, $-(CH_2)_2-O-N=C(R^8)-$ or $-X-A^2-N(R^9)-$ with

  n = 0, 1 or 2,
  k = 1 to 9,
  $A^1 = -CHR^7-$,
  $A^2 = -C(=X)-$,
  $A^3 = -C(R^8)=N-O-$,
  $A^4 = -O-N=C(R^8)-$,
  X = O or S,
  $X^1$ = O, S, $NR^9$ or a direct bond,
  $X^2$ = O, $NR^9$ or a direct bond,
  $X^3$ = hydrogen, -C(=O)-, $-SO_2-$ or a direct bond,

- $R^7$, which are mutually identical or different, each correspond to an optionally substituted alkyl, to a cycloalkyl or a phenyl, it being possible for each of these groups to be substituted, hydrogen, a halogen, a cyano, or an acyl;
- $R^8$, which are mutually identical or different, each correspond to an alkyl, an alkenyl, an alkynyl, an alkoxy, an alkylthio, it being possible for each of these groups to be substituted, a carbocyclic or heterocyclic monovalent group which may be optionally substituted, or hydrogen;
- $R^9$, which are mutually identical or different, each correspond to an optionally substituted alkyl, to a monovalent carbocyclic or heterocyclic group which may be optionally substituted, or to an acyl; or two $R^9$ groups may form together, and with the atoms linking them, a 5-7-membered ring;
- the group represented on the right side of the bond A is linked to $R^6$; or -A-$R^6$ and $R^5$ form together with the benzene ring M, a system of optionally substituted condensed rings;
- and the optional optical and/or geometric isomers, the tautomers and the addition salts with an acid or a base, which are agriculturally acceptable, of these derivatives of formula (I); and mixtures thereof; and

B) a fungicide compound selected from actinovate; aldimorph; andoprim; boscalid; capsimycin; carvone; clozylacon; cyflufenamid; diclomezine; flumorph; fluoxastrobin; iodocarb; irumamycin; metrafenone; mildiomycin; myclobutanil; orysastrobin; oxolinic acid; oxpoconazole; oxyfenthiin; paclobutrazol; penthiopyrad; picobenzamid; propanosine-sodium; proquinazid; prothioconazole; pyrrolnitrine; GY-81 also known as sodium tetrathio-(peroxocarbonate); tecloftalam; tiadinil; tricyclamide; uniconazole; cis-1-(4-chlorophenyl)-2-(1H-1,2,4-triazole-1-yl)-cycloheptanol; N-(3-ethyl-3,5,5-trimethyl-cyclohexyl)-3-formylamino-2-hydroxy-benzamide; N-(6-methoxy-3-pyridinyl)-cyclopropanecarboxamide; N-butyl-8-(1,1-dimethylethyl)-1-oxaspiro[4.5]decan-3-amine; methyl 1-(2,3-dihydro-2,2-dimethyl-1 H-inden-1-yl)-1 H-imidazole-5-carboxylate; methyl 2-[[[cyclopropyl[(4-methoxyphenyl)imino]methyl]thio]methyl]-.alpha.-(methoxymethylene)- benzeneacetate; methyl 2-[2-[3-(4-chloro-phenyl)-1-methyl-allylideneaminooxymethyl]-phenyl]-3-methoxy-acrylate; (2S)-N-[2-[4-[[3-(4-chlorophenyl)-2-propynyl]oxy]-3-methoxyphenyl]ethyl]-3-methyl- 2-[(methylsulfonyl)-amino]-butanamide; 1-(1-naphthalenyl)-1 H-pyrrole-2,5-dione; 2,3,5,6-tetrachloro-4-(methylsulfonyl)-pyridine; 2,4-dihydro-5-methoxy-2-methyl-4-[[[[1-[3-(trifluoromethyl)-phenyl]-ethylidene]-amino]-oxy]-methyl]-phenyl]-3H-1,2,3-triazol-3-one; 2-amino-4-methyl-N-phenyl-5-thiazolecarboxamide; 2-chloro-N-(2,3-dihydro-1,1,3-trimethyl-1 H-inden-4-yl)-3-pyridincarboxamide; 3,4,5-trichloro-2,6-pyridinedicarbonitrile; 3-[(3-bromo-6-fluoro-2-methyl-1H-indol-1-yl)sulfonyl]-N,N-dimethyl-1H-1,2,4-triazole-1-sulfonamide, and mixtures thereof.

**2.** Composition according to claim 1 comprising a compound (A) of formula (I) wherein:

- $R^1$ is an alkyl, an alkenyl or an alkynyl, it being possible for each of these groups to be substituted with an alkoxy, a haloalkoxy, an alkylthiol, halogen or a phenyl optionally substituted with an alkyl, with a haloalkyl, with an alkoxy, with a haloalkoxy, with an alkylthiol or with a halogen, or hydrogen;
- $R^2$ and $R^3$ which may be identical or different and which have the same definition as that given above for $R^1$ or which correspond to an alkoxy, an alkoxyalkyl, a benzyloxy, a cyano or an alkylcarbonyl;
- $R^4$ is an alkyl, an alkenyl or an alkynyl, it being possible for each of these groups to be substituted with alkoxy, a haloalkoxy, an alkylthiol, halogen or a phenyl optionally substituted with an alkyl, with a haloalkyl, with an alkoxy, with a haloalkoxy, with an alkylthiol or with a halogen; a hydroxyl; an halogen; a cyano; an acyl (preferably: $-C(=O)R^c$, $-C(=S)R^c$ or $-S(O)_pR^c$, with $R^c$ corresponding to an alkyl, a haloalkyl, alkoxy, haloalkoxy, alkylthiol, an amine, a monoalkylamine, a dialkylamine or a phenyl optionally substituted with an alkyl, with a haloalkyl, with an alkoxy, with a haloalkoxy, or with an alkylthiol;
- m = 0 or 1;
- when it is present, $R^5$ is a group having the same definition as that given above for $R^4$,
- A is a direct bond, -O-, -S-, $-NR^9-$, $-CHR^7-$ or $-O-CHR^7-$,
- with $R^9$, when it is present, corresponding to an alkyl, an alkenyl or an alkynyl, it being possible for each of these groups to be substituted with an alkoxy, a haloalkoxy, an alkylthiol, halogen or a phenyl optionally substituted with an alkyl, with a haloalkyl, with an alkoxy, with a haloalkoxy, with an alkylthiol or with a halogen, or corresponds to hydrogen;
- and $R^7$ has the same definition as that given above for $R^9$ or represents a hydroxyl; a halogen; a cyano; an acyl; alkoxy; a haloalkoxy or an alkylthiol;
- A is linked to the 4-position of the benzyl ring M; and
- $R^6$ is a phenyl or an aromatic heterocycle, optionally substituted with one or more substituents, which may be identical or different, and which may be selected from the following list: hydroxyl; halogen; cyano; acyl (preferably $-C(=O)R^c$, $-C(=S)R^c$ or -S(O)p$R^c$, with $R^c$ = alkyl, haloalkyl, alkoxy, haloalkoxy, alkylthiol or phenyl optionally substituted with an alkyl, haloalkyl, alkoxy, haloalkoxy or alkylthiol); amine; alkylamine; dialkylamine; alkyl,

haloalkyl, $R^aO$-alkyl, acyloxyalkyl, cyanooxyalkyl, alkoxy; haloalkoxy; alkylthiol; cycloalkyl (preferably cyclohexyl or cyclopentyl) optionally substituted with an alkyl, a haloalkyl, an alkoxy, a haloalkoxy or with an alkylthiol; and benzyl optionally substituted with an alkyl, a haloalkyl, an alkoxy, a haloalkoxy or with an alkylthiol.

**3.** Composition according to claims 1 or 2 comprising a compound (A) of formula (I) wherein:

- $R^1$ = H
- $R^2$ = C1-C6 alkyl;
- $R^3$= C1-C6 alkyl;
- $R^4$ = C1-C6 alkyl;
- $R^5$ = C1-C6 alkyl and $R^5$ is linked to the carbon at C5 of the benzyl ring M, with m=1;
- A is linked to the carbon at C4 of the benzyl ring M and represents -O-;
- $R^6$ = aryl optionally substituted with at least one alkyl and/or with at least one halogen.

**4.** Composition according to claim 3 comprising a compound (A) of formula (I) wherein:

- $R^2$ =methyl;
- $R^3$ = ethyl;
- $R^4$ = methyl;
- $R^5$ = methyl and $R^5$ is linked to the carbon at C5 of the benzyl ring M, with m = 1;
- $R^6$ = benzyl substituted with at least one alkyl and/or with at least one halogen.

**5.** Composition according to claims 1 to 4 wherein compound (A) is *N*-ethyl-*N*-methyl-*N'*-[4-(chloro-3-trifluoromethylphenoxy)-2,5-xylyl]-formamidine or and *N*-ethyl-*N*-methyl-*N'*-[4-(fluoro-3-trifluoromethylphenoxy)-2,5-xylyl]-formamidine and the possible tautomers and addition salts with an acid or a base, which are agriculturally acceptable.

**6.** Composition according to claims 1 to 5 wherein compound (B) is prothioconazole.

**7.** Composition according to claims 1 to 5 wherein compound (B) is fluoxastrobin.

**8.** Composition according to claims 1 to 5 wherein compound (A) is *N*-ethyl-*N*-methyl-*N'*-[4-(chloro-3-trifluoromethylphenoxy)-2,5-xylyl]-formamidine and compound (B) is fluoxastrobin or prothioconazole.

**9.** Composition according to claims 1 to 8 wherein the weight ratio between compound (A) and compound (B) is $0.001 \leq A/B \leq 500$.

**10.** Composition according to claim 9 wherein the weight ratio is $0.01 \leq A/B \leq 10$.

**11.** Composition according to claim 8 wherein the weight ratio between compound (A) and compound (B) is $0.05 \leq A/B \leq 5$.

**12.** Method for controlling phytopathogenic fungi of crops, **characterized in that** an agronomically effective and substantially non-phytotoxic quantity of a fungicide composition according to claims 1 to 11 is applied to the soil where plants grow or are capable of growing, to the leaves and/or the fruit of plants or to the seeds of plants.

**13.** Method according to claim 12 wherein the dose of compound (A) and of compound (B) is from 1 g/ha to 2,000g/ha.

**14.** Method according to claim 13 wherein the dose of compound (A) and of compound (B) is from 5g/ha to 700g/ha.

**15.** Method according to claims 12 to 14 for protecting cereal crops (wheat, barley, maize, rice) and vegetable crops (haricot bean, onion, cucurbitaceae, cabbage, potato, tomato, sweet pepper, cabbage, pea, lettuce, celery, chicory), fruit crops (strawberry plants, raspberry plants), tree crops (apple trees, pear trees, cherry trees, ginseng, lemon trees, coconut palms, pecan trees, cacao trees, walnut trees, rubber trees, olive trees, poplars, banana trees), grapevine, sunflower, beetroot, tobacco and ornamental crops, luceme, soyabean, market garden crops, turf, wood or horticultural plants.

**16.** Method according to claims 12 to 15 for controlling cereal diseases selected from powdery mildew, Septoria diseases and brown rust.

European Patent Office

# EUROPEAN SEARCH REPORT

Application Number
EP 04 35 6031

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | WO 03/024219 A (LABOURDETTE GILBERT ; O'NEILL ELIZABETH (FR); VILLIER ALAIN (FR); ZUND) 27 March 2003 (2003-03-27) * page 24, line 11 - line 23 * * page 26, line 27 - line 31 * * claim 1 * | 1-16 | A01N37/52 |
| A,D | WO 00/46184 A (HOECHST SCHERING AGREVO GMBH ; ATHERALL JOHN FREDERICK (GB); HOUGH THO) 10 August 2000 (2000-08-10) * page 63 - page 64; claim 1 * | 1-16 | |
| A | WO 03/093224 A (DU PONT ; TSENG CHI-PING (US)) 13 November 2003 (2003-11-13) * page 132, line 4 - page 138; claim 1 * | 1-16 | |
| E | WO 2004/037239 A (LABOURDETTE GILBERT ; MANSFIELD GILLIAN (FR); O'NEILL ELIZABETH (FR);) 6 May 2004 (2004-05-06) * page 7, line 5 - line 8 * * page 9, line 18 - line 25 * | 1-16 | |
| | | | TECHNICAL FIELDS SEARCHED (Int.Cl.7) |
| | | | A01N |

The present search report has been drawn up for all claims

1

| Place of search | Date of completion of the search | Examiner |
|---|---|---|
| Munich | 20 July 2004 | Molina de Alba, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 04 35 6031

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2004

| Patent document cited in search report | Publication date | Patent family member(s) | Publication date |
|---|---|---|---|
| WO 03024219 A | 27-03-2003 | FR 2829362 A1 | 14-03-2003 |
| | | CA 2459098 A1 | 27-03-2003 |
| | | EP 1424893 A1 | 09-06-2004 |
| | | WO 03024219 A1 | 27-03-2003 |
| WO 0046184 A | 10-08-2000 | AT 247629 T | 15-09-2003 |
| | | AU 768156 B2 | 04-12-2003 |
| | | AU 2308800 A | 25-08-2000 |
| | | BR 0009314 A | 13-02-2002 |
| | | CA 2360943 A1 | 10-08-2000 |
| | | CN 1342137 T | 27-03-2002 |
| | | CZ 20012842 A3 | 13-03-2002 |
| | | DE 60004637 D1 | 25-09-2003 |
| | | DE 60004637 T2 | 15-04-2004 |
| | | DK 1150944 T3 | 15-12-2003 |
| | | EP 1150944 A1 | 07-11-2001 |
| | | ES 2200816 T3 | 16-03-2004 |
| | | WO 0046184 A1 | 10-08-2000 |
| | | HU 0105098 A2 | 29-04-2002 |
| | | JP 2002536354 T | 29-10-2002 |
| | | PT 1150944 T | 31-12-2003 |
| | | TR 200102237 T2 | 21-12-2001 |
| | | ZA 200105845 A | 16-10-2002 |
| WO 03093224 A | 13-11-2003 | WO 03093224 A1 | 13-11-2003 |
| WO 2004037239 A | 06-05-2004 | EP 1413301 A1 | 28-04-2004 |
| | | WO 2004037239 A1 | 06-05-2004 |

EPO FORM P0459

For more details about this annex : see Official Journal of the European Patent Office, No. 12/82